# EUROPEAN PATENT APPLICATION

(11) **EP 3 651 111 A1**
(43) Date of publication of application: **13.05.2020**
(21) Application number: 19207324.5
(22) Date of filing: 05.11.2019
(51) Int. Cl.: G06Q 50/04

(54) **SYSTEMS AND METHODS FOR GENERATING IMMUTABLE RECORDS AND ELECTRONIC LISTINGS OF HARVESTED AEROSPACE EQUIPMENT PARTS**

(30) Priority: 09.11.2018 US 201862758255 P; 31.07.2019 US 201916527221
(71) Applicant: Honeywell International Inc., Morris Plains, NJ 07950 (US)
(72) Inventor: BUTTERS, Lisa Estipona, Morris Plains, NJ New Jersey 07950 (US); SOLIS, Matthew, Morris Plains, NJ New Jersey 07950 (US); MINYARD, Jason, Morris Plains, NJ New Jersey 07950 (US); HUMPHERYS, Grant, Morris Plains, NJ New Jersey 07950 (US); DOTY, Keith, Morris Plains, NJ New Jersey 07950 (US)
(74) Representative: Haseltine Lake Kempner LLP

(57) **Abstract**

Disclosed are methods, systems, and non-transitory computer-readable medium for creating an immutable record of part dismantlement transactions and generating electronic listings of harvested parts. For example, a method may receiving images of a first part of equipment, wherein the first part has been disassembled from the equipment; generating a first removal document, the first removal document comprising data indicative of a disassembly of the first part from the equipment; collecting one or more data attributes associated with the first part; storing the images of the first part, the first removal document, and the one or more data attributes associated with the first part, in a shared database; and generating one or more electronic listings for electronically transacting the first part, based on the stored images of the first part, the first removal document, and the one or more data attributes associated with the first part.

## Description

### TECHNICAL FIELD

Various embodiments of the present disclosure generally relate to listing equipment parts at an online platform, and more particularly, to generating immutable records of equipment part dismantlement and automatically generating listings at an online platform.

### BACKGROUND

When a vehicle or equipment having reusable parts has reached the end of its life (e.g., an aircraft scheduled to be decommissioned and dismantled), parts may be harvested from the equipment and become available for transactions. For example, approximately $4 billion of aerospace parts are being traded annually throughout the world. However, less than 2% of the aerospace parts commerce is conducted through online or electronic platforms, which indicates a strong inclination against transacting electronically in the aerospace parts industry. Such inclinations may be largely due to a lack of trust between selling and buying entities of valuable equipment parts. At an online platform for harvested equipment parts, a buyer of parts may, for example, lack trust over a seller's' identity, ghost listings, and/or tampered data attributes in listings. Likewise, a seller may lack trust in the buyer's identity or mode of payment. While manual transactions may alleviate some of these factors related to trust, manual transactions often rely on intermediaries who cause other types of costs or burden by, for example, requiring buyers and sellers to have several conversations to assess the correctness of information/attributes tied to the equipment before a deal is made.

Thus, existing processes in equipment parts transactions often rely on operations which are manual, costly, and unsecure. There is a need for an online platform, in which equipment parts may be automatically and electronically traded with enhanced security and reliability of the underlying electronic data.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

According to certain aspects of the disclosure, systems and methods disclosed relate to electronically listing parts at an online platform using electronic data files and processing conditional transaction requests.

In one embodiment, a computer-implemented method is disclosed for creating an immutable record of part dismantlement transactions and generating electronic listings of harvested parts. The computer-implemented method may comprise: receiving, by one or more processors, one or more images of a first part of equipment, wherein the first part has been disassembled from the equipment; generating, by the one or more processors, a first removal document, the first removal document comprising data indicative of a disassembly of the first part from the equipment; collecting, by the one or more processors, one or more data attributes associated with the first part, by at least one of accessing one or more databases or receiving one or more user inputs; storing, by the one or more processors, the one or more images of the first part, the first removal document, and the one or more data attributes associated with the first part, in a shared database; and generating, by the one or more processors, one or more electronic listings for electronically transacting the first part, based on the stored one or more images of the first part, the first removal document, and the one or more data attributes associated with the first part.

In accordance with another embodiment, a computer system is disclosed for creating an immutable record of part dismantlement transactions and generating electronic listings of harvested parts. The computer system may comprise: a memory having processor-readable instructions stored therein; and at least one processor configured to access the memory and execute the processor-readable instructions, which when executed by the at least one processor configures the at least one processor to perform a plurality of functions, including functions for: receiving one or more images of a first part of equipment, wherein the first part has been disassembled from the equipment; generating a first removal document, the first removal document comprising data indicative of a disassembly of the first part from the equipment; collecting one or more data attributes associated with the first part, by at least one of accessing one or more databases or receiving one or more user inputs; storing the one or more images of the first part, the first removal document, and the one or more data attributes associated with the first part, in a shared database; and generating one or more electronic listings for electronically transacting the first part, based on the stored one or more images of the first part, the first removal document, and the one or more data attributes associated with the first part.

In accordance with another embodiment, a non-transitory computer-readable medium containing instructions is disclosed for creating an immutable record of part dismantlement transactions and generating electronic listings of harvested parts. The non-transitory computer-readable medium may comprise instructions for: receiving one or more images of a first part of equipment, wherein the first part has been disassembled from the equipment; generating a first removal document, the first removal document comprising data indicative of a disassembly of the first part from the equipment; collecting one or more data attributes associated with the first part, by at least one of accessing one or more databases or receiving one or more user inputs; storing the one or more images of the first part, the first removal document, and the one or more data attributes associated with the first part, in a shared database; and generating one or more electronic listings for electronically transacting the first part, based on the stored one or more images of the first part, the first removal document, and the one or more data attributes associated with the first part.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an example environment in which methods, systems, and other aspects of the present disclosure may be implemented.
FIG. 2 depicts a block diagram of integrating a blockchain shared ledger with a user device and the online platform for listing equipment parts, according to one or more embodiments.
FIG. 3 depicts a flowchart of an exemplary method for creating an immutable record of part dismantlement transactions and generating electronic listings of harvested parts, according to one or more embodiments.
FIG. 4 depicts a simplified screen shot of an exemplary user interface for displaying equipment part details associated with each part dismantled from the equipment, according to one or more embodiments.
FIG. 5 depicts a simplified screen shot of an exemplary buyer interface for providing electronic listings of parts available for purchase, according to one or more embodiments.
FIG. 6 depicts an exemplary computer device or system, in which embodiments of the present disclosure, or portions thereof, may be implemented.

### DETAILED DESCRIPTION

The following embodiments describe systems and methods for creating an immutable record of part dismantlement transactions and generating electronic listings of harvested parts.

To better protect the integrity and reliability of electronically stored sensitive data (e.g., data containing sensitive information related to transactions), an electronic data set should be stored securely in a manner that enhances protection from tampering, threats, corruptions, and/or mishandling. Embodiments of the present disclosure provide technological improvements necessarily rooted in electronic data protection technologies, by applying particular forms of blockchain technology and/or other assistive data protection technologies in a uniquely automated manner to enhance security, technical reliability, and accessibility of sensitive transaction data.

In addition, integrating such data security features at an equipment online marketplace platform necessarily improves the functioning of the overall electronic online marketplace platform, as a whole, by rendering more secure data repositories (e.g., part-by-part blockchain entries) for use in conjunction with an automated listing and transaction processes (e.g., part-by-part dismantlement transactions automatically resulting in an electronically generated listings of a harvested part). Such automations and data security enhancement techniques necessarily improve the functioning of the network and/or the connected devices, by, for example, removing technical bottlenecks resulting from maintaining listings of unsold or unreliable parts in memory (e.g., the unsold parts arising from ghost listings, unreliable data attributes, etc.).

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. For example, equipment, as used herein throughout the present disclosure, may include products or services traded in primary and secondary marketplaces among organizations. As such, equipment may include, for example, aircraft, aerospace parts and components, time-constrained equipment/services such as airline gates or airport runways, or any other aerospace-related product or service traded among airlines, airports, aircraft, or aerospace original equipment manufacturers (OEMs). While the exemplary equipment online marketplace platform of the present disclosure relates to aerospace-related equipment, equipment may also include any other type of vehicles, vehicle parts and components, vehicle services, heavy equipment, heavy equipment parts and components, heavy equipment services, computing devices, computing device parts and components, computing device services, or any other products or services traded between businesses and individuals through primary and secondary marketplaces.

Certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

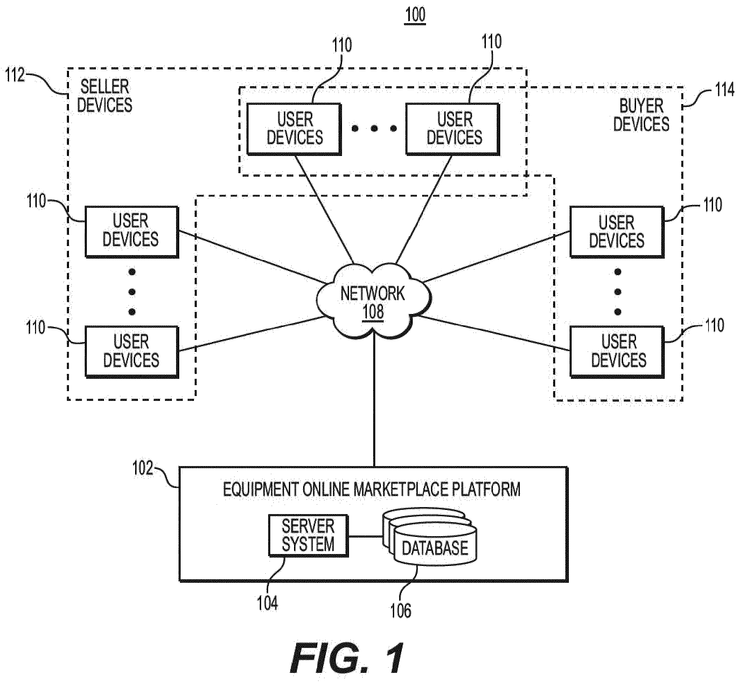

Referring now to the appended drawings, FIG. 1 depicts a block diagram of a system 100 for an equipment online marketplace, according to aspects of the disclosure. As shown in FIG. 1, the system 100 for an equipment online marketplace may include an equipment online marketplace platform 102, such as an aerospace parts online marketplace platform, including server systems 104 and electronic databases 106. The server systems 104 may store and execute the equipment online marketplace platform 102 for use through a network 108, such as the Internet. The equipment online marketplace platform 102 may be implemented through one or more server systems 104, such as an application program interface (API) server, web page servers, image servers, listing servers, processing servers, search servers, or other types of front-end or back-end servers.

Users may access the equipment online marketplace through the network 108 by user devices 110, such as a computing device or the like. User devices 110 may allow a user to display a web browser for accessing the equipment online marketplace from the server system 104 through the network 108. The user devices 110 may be any type of device for accessing web pages, such as personal computing device, mobile computing devices, or the like. User devices 110 may be seller devices 112 or buyer devices 114. As such, users may be sellers and/or buyers through the equipment online marketplace. As further shown in FIG. 1, in some cases, user devices 110 may be both seller devices 112 and buyer devices 114. Thus, users may access the equipment online marketplace as both sellers and buyers.

Further, the equipment online marketplace may include a seller interface and a buyer interface. In some implementations, the buyer interface may be referred to as the first user interface, and the seller interface may be referred to as the second user interface. The seller interface may be displayed to a user accessing the equipment online marketplace as a seller on a user device 110. The seller interface may, for example, include features to enable a seller to enter, or input, the information of the vehicle, aerospace, or equipment part that the seller desires to sell through the equipment online marketplace. For example, the seller interface may allow a seller to create, edit, or delete equipment listings based on the information of a corresponding vehicle, aerospace, or equipment part. The buyer interface may be displayed to a user accessing the equipment online marketplace as a buyer on a user device 110. The buyer interface may include features to enable a buyer to search for, select, and/or purchase equipment from an equipment listing created by a seller. As discussed above, the equipment online marketplace may facilitate equipment purchase transactions using various features, as further described below.

As indicated above, FIG. 1 is provided merely as an example. Other examples are possible and may differ from system 100 of FIG. 1. In addition, the number and arrangement of devices and networks shown in system 100 are provided as an example. In practice, there may be additional devices, fewer devices and/or networks, different devices and/or networks, or differently arranged devices and/or networks than those shown in system 100. Furthermore, two or more devices shown in FIG. 1 may be implemented within a single device, or a single device shown in FIG. 1 may be implemented as multiple, distributed devices. Additionally, or alternatively, one or more user devices in system 100 may perform one or more functions of the server system 104 and/or the equipment online marketplace platform 102.

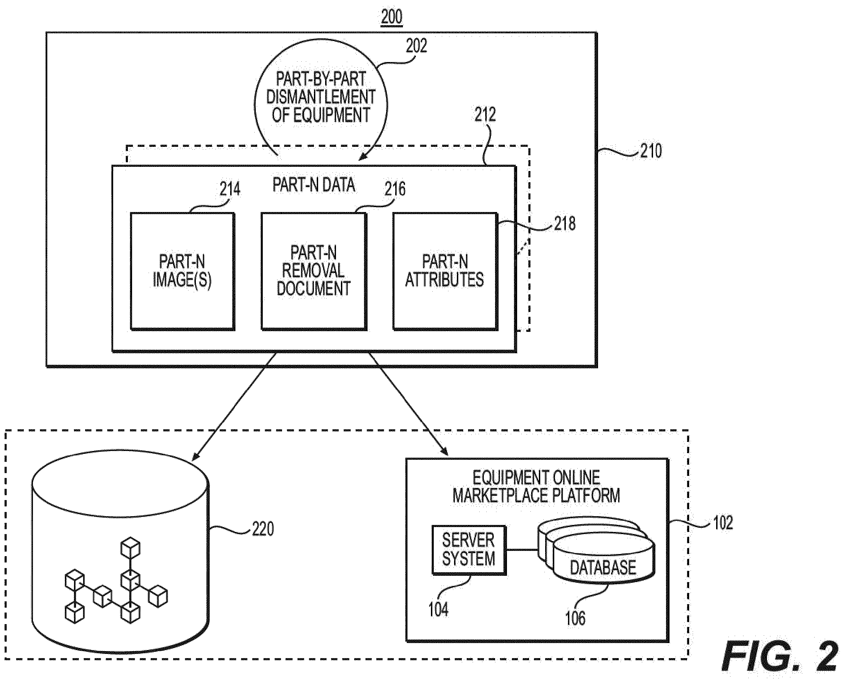

FIG. 2 depicts an exemplary block diagram 200 of integrating a blockchain shared ledger 220 with a user device 210 and the online platform 102 for listing the equipment parts, according to one or more embodiments. In the exemplary block diagram 200, device 210 may be a computing device (e.g., user device 110 depicted in FIG. 1) connected to a network (e.g., network 108 depicted in FIG. 1). For example, device 210 may be a user device 110 among seller devices 112, or alternatively, it may be a computer system of any entity associated with an equipment disassembly or dismantlement process (e.g., equipment dismantler, parts maintainer, parts inspector, parts photographer, equipment owner, equipment seller, an agent of the equipment online marketplace platform 102, etc.). In some implementations, device 210 may collectively refer to a set of multiple user devices 110 and/or computer systems associated with equipment dismantlement process.

In an equipment dismantlement process, a part-by-part iteration 202 of the dismantlement may be an operation of disassembling one part (e.g., part-N) from the equipment and recording this individual disassembly transaction. For a particular equipment dismantlement operation, there may be multiple iterations of dismantlement. After one iteration with disassembly of one part (e.g., part-1), another iteration may occur with disassembly of another part (e.g., part-2), and successive iterations may continue to occur thereafter until all necessary iterations have been completed.

As used herein, a "part" being disassembled or removed (e.g., a part being disassembled at Nth iteration of dismantlement, depicted in FIG. 2 with exemplary label "part-N") may be a part selected from any hierarchical level of equipment parts. For example, a part-N may be the whole engine, at the uppermost level (e.g., an equipment system) of the parts hierarchy of an aircraft. Alternatively, a part-N may be an entire compressor from an aircraft engine, which is at an intermediate level (e.g., an equipment subsystem) of the parts hierarchy. A part-N may also be an individual rotating fan blade from a compressor, which is at the individual component level of the parts hierarchy. A selection as to which hierarchical level that each disassembled part comes from may be determined using a preset rule stored anywhere within environment 100, an input by an authorized user of device 210, or a communication of preference from any entity associated with potential transaction of part-N (e.g., a buyer or a seller at the equipment online marketplace platform 102, etc.).

In a given iteration 202 of an equipment dismantlement operation, a part-N may be disassembled from equipment (e.g., aircraft or vehicle) where the part originally belonged. Subsequently, the corresponding data 212 of the disassembled part-N may be generated at the device 210. The corresponding data 212 of part-N may comprise one or more images 214 (e.g., a photograph, a picture, a diagram, an animated image file, a video file, a video capture, etc.) which are electronically recorded (e.g., using a camera, a scanner, or any other image recording device), and/or retrieved from an existing source (e.g., download, transmission, user input, etc.). If one or more images 214 of part-N is electronically recorded using an image recording device, the one or more images may be recorded while part-N is, for example, placed on a surface (e.g., a table) or in an otherwise fixed position.

The corresponding data 212 of part-N may also include one or more removal documents 216 of part-N, which include data indicative of the disassembly transaction of part-N. The device 210, the server system 104, or any computing device within system 100 may generate the removal document 216. The one or more removal documents 216 may be, for example, an as-removed tag, a time stamp, a memorialization, or any type of stand-alone or embedded electronic documentation indicative of the removal transaction of part-N.

Additionally, the corresponding data 212 of part-N may include one or more data attributes 218 associated with part-N. The attributes may be data fields indicative of, for example, part identifiers, part type, part removal time, equipment identifiers, equipment type, part condition, time and cycles since installation, time since new, and cycles since new, registration status, part manufacturer, place of part manufacture, equipment manufacturer, or any other attribute associated with the disassembled part-N. A selection of the attribute fields to be included in the corresponding data 212 may be determined using a preset rule stored in any computing device within system 100, an input by an authorized user of device 210, or a communication of preference from any authorized entity associated with online marketplace transaction of part-N (e.g., a buyer or a seller at the equipment online marketplace platform 102, etc.). The content(s) of each of the one or more data attributes 218 may be provided via one or more user inputs at the device 210, and/or be imported from any other source (e.g., accessing data stored in a device of system 100 or any existing third party database).

A shared ledger 220 may be in communication with device 210, and may store corresponding data 212 in order to securely maintain each electronic record of equipment parts. In some implementations, the shared ledger 220 may store data as blockchain entries in a blockchain network. For example, one common blockchain in a blockchain network may host entries corresponding to all parts disassembled from the same equipment. One or more user devices 110 and/or the server system 104 may serve as the nodes in the blockchain network. Because the shared ledger 220 may serve as a blockchain replicated and spread across these nodes, the shared ledger 220 may be stored in, or may maintain copies in, a memory device within device 210, one or more internal databases associated with one or more user devices 110, equipment online marketplace platform databases 106, or in one or more external databases in connection with the device 210.

In some implementations, storing corresponding data 212 as blockchain entries may also include an automated listing accreditation method, which achieves both creating trusted blockchain entries of corresponding data 212 of part-N, and generating an accredited automated listing of the part-N at the equipment online marketplace platform. An automated listing accreditation method may include, for example, (i) receiving a request to add equipment listing or equipment part listing to the equipment online marketplace platform, (ii) broadcasting a message to endorse identity information of the equipment or the equipment part to a trusted network of users, and (iii) receiving endorsements of the equipment or the equipment part from the users to verify the identity of equipment or the equipment part.

Under these implementations, an equipment part may be verified for both a blockchain entry and a listing, if, for example, one of the endorsement conditions are met. First, if the data 212 corresponding to equipment part is endorsed by a requisite number or percentage of users, listing of part-N may be verified. For example, if the data 212 are endorsed by at least 51% of users, part-N may be verified. While the exemplary embodiment requires at least 51% of users for verifying the information, any number or percentage of users may be used to verify an equipment identity. Second, if the current ownership information associated with part-N is stored in the blockchain shared ledger and the identity of the user dismantling and/or listing part-N matches the current ownership information, the equipment may be endorsed for listing. Third, if the current ownership information associated with part-N is not stored in the blockchain shared ledger, but the requesting user is a certified member of a trusted network of users, part-N may be endorsed for listing. Depending on preset rules, preferences, and/or consensus of the users of the equipment online marketplace platform 102, these conditions may be modified, or other conditions may be entered in the automated listing accreditation method. If the equipment is endorsed under an automated listing accreditation method, the blockchain entries corresponding to data 212 of part-N may be created, and the server system 104 may generate a listing for the equipment on the equipment online marketplace platform.

Additionally, the blockchain entries of the disassembled parts in the shared ledger 220 may also include entries indicating an equipment pedigree trace using a traceable equipment pedigree method. The traceable equipment pedigree method may include storing all actions performed on the equipment, such as dismantlement operations, across all nodes of the shared ledger as a blockchain entry for the equipment. Under these implementations, dismantlement functions performed on the equipment may be verified by smart contracts between the nodes of the blockchain network and/or a set of users of the equipment online marketplace platform 102. The history of the disassembled parts (e.g., part-N) and dismantlement operations stored in the shared ledger may be queried or accessed by a user to trace the history of the equipment. The equipment pedigree trace for an aerospace part may include, for example, information such as part number, serial number, image of the art, Form FAA 8130-3 for the part, current owner of the part, maintenance steps performed on the part, or any other information related to tracing the history of the part or equipment.

In some implementations, recording data as blockchain entries in a shared ledger 220 may be implemented as an optional feature. Under these implementations, neither a blockchain entry nor a blockchain-based shared ledger may be formed if the server system 104 or the device 210 determines that blockchain techniques should not be used. For example, databases 106 may not be capable of hosting a distributed ledger taking blockchain entries, or there may be other reasons (e.g., cost or resources for implementing shared ledger 202 and/or blockchain network nodes) for foregoing the use of blockchain techniques. If blockchain entry generation is not to be performed, data 212 corresponding to part-N may still be securely maintained in a shared database, such as one or more databases 106, to store each electronic record of equipment parts (e.g., part-N) being disassembled from the equipment. Even without blockchain technologies, other assistive data protection technologies (e.g., read-write privileges, encryption, authentication, etc.) may be employed in order to create an immutable record of dismantlement transactions.

The number and arrangement of devices and networks shown in FIG. 2 are provided as an example. In practice, there may be additional devices, fewer devices and/or networks, different devices and/or networks, or differently arranged devices and/or networks than those shown in FIG. 2. Furthermore, two or more devices shown in FIG. 2 may be implemented within a single device, or a single device shown in FIG. 2 may be implemented as multiple, distributed devices. Additionally, or alternatively, a set of devices (e.g., one or more devices) of the exemplary block diagram 200 may perform one or more functions described as being performed by another set of devices of the exemplary block diagram 200 or system 100.

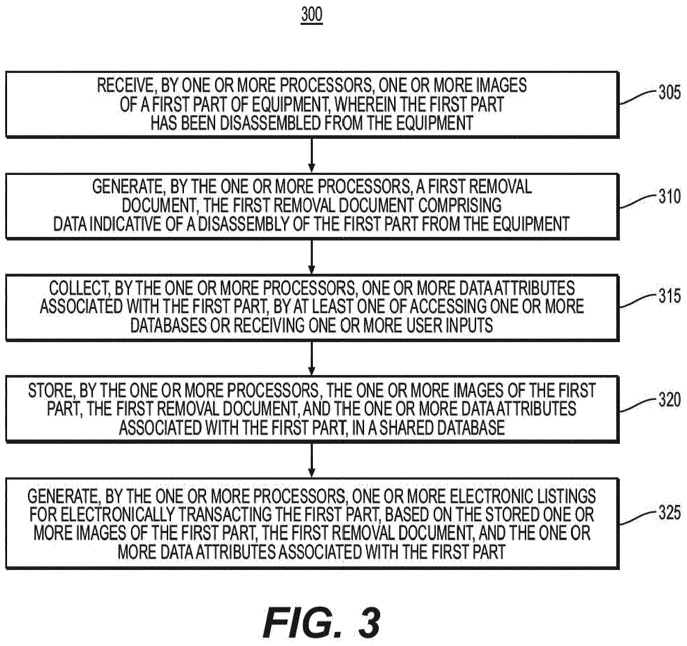

FIG. 3 depicts a flowchart of an exemplary method 300 for creating an immutable record of part dismantlement transactions and generating electronic listings of harvested parts, according to one or more embodiments. In the exemplary method 300, one or more computer processors may receive one or more images of a first part of equipment, wherein the first part has been disassembled from the equipment (Step 305). The one or more computer processors may also generate a first removal document, the first removal document comprising data indicative of a disassembly of the first part from the equipment (Step 310). The one or more computer processors may additionally collect one or more data attributes associated with the first part, by at least one of accessing one or more databases or receiving one or more user inputs (Step 315). Then, the one or more computer processors may store the one or more images of the first part, the first removal document, and the one or more data attributes associated with the first part, in a shared database (Step 320). The one or more computer processors may also generate one or more electronic listings for electronically transacting the first part, based on the stored one or more images of the first part, the first removal document, and the one or more data attributes associated with the first part (Step 325).

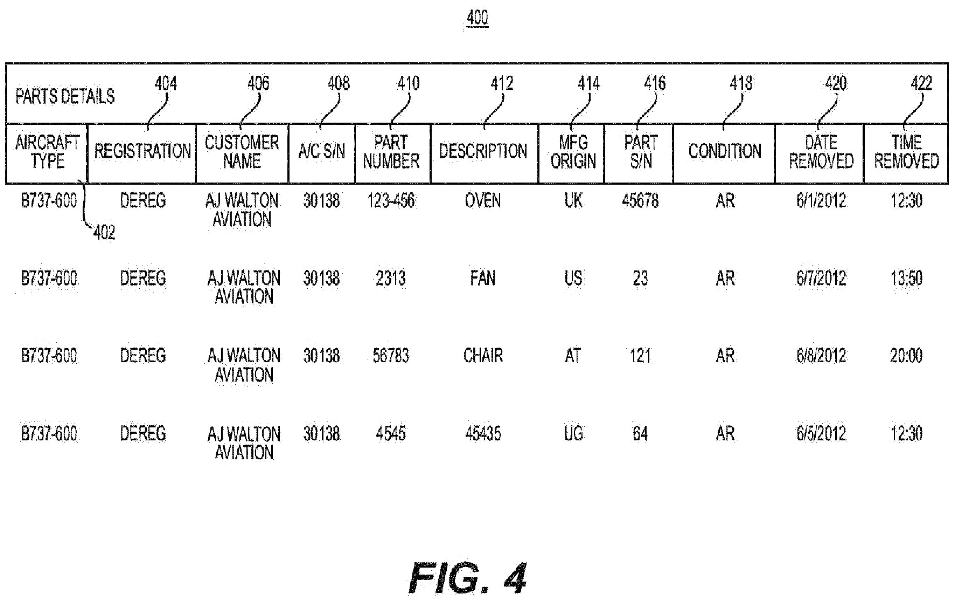

FIG. 4 depicts a simplified screen shot of an exemplary user interface 400 for displaying equipment part details associated with each part dismantled from the equipment, according to one or more embodiments. As each iteration of part-by-part dismantlement is performed and recorded, a user interface may be generated and provided to computing systems (e.g., user device 110 or device 210) of entities associated with the dismantlement process, to display requested details on the harvested parts. The user interface may be generated by one or more computing systems (e.g., user device 110 or device 210) of entities associated with the dismantlement process. Additionally, or alternatively, the user interface may be generated and provided to any user (e.g., buyers or sellers) of equipment online marketplace platform 102, during or after an equipment dismantlement process, at a user device 110.

On this user interface, parts' details are displayed based on requested and available attributes of the parts. In the exemplary user interface 400 for some aircraft parts, the attributes requested for display are aircraft type 402, registration status 404, customer name 406, aircraft serial number 408, part number 410, part description 412, manufacturing origin 414, part serial number 416, condition 418, date removed 420, and time removed 422. The attributes depicted in FIG. 4 are shown by way of as examples only, and are not limiting or exhaustive. Users may add one or more other attributes, and/or remove one or more attributes. The selection pool of attributes may also be customizable. The selection pool may be, for example, a subset or a superset of data attributes 218 stored during dismantlement (depicted in FIG. 2). A selection of the attributes to be displayed at the user interface of FIG. 4 may be determined using a preset rule stored in a computing system in system 100, an input by an authorized user of device 210 associated with the dismantlement process, or a communication of preference from any entity associated with an online marketplace transaction of part-N (e.g., a buyer or a seller at the equipment online marketplace platform 102, etc.). As described in detail with respect to FIG. 2, the content(s) of each of the one or more data attributes 218 may be provided by the user of device 210 during dismantlement iterations 202, or may be imported from any other source (e.g., a device in system 100 or any existing third party database sources).

Additionally, a user at the exemplary user interface may sort or filter the displayed data based on the contents of the attributes. For example, the user may request to filter the data table and view only the parts harvested from a particular aircraft type (e.g., by applying a keyword filter "B737-600"). As another example, the user may request to filter the data table to only parts removed at a certain date range (e.g., setting and applying a date range filter on "date removed"), and additionally sort the resulting data by the "time removed" in an ascending order. The user interface may be configured to display at various computing platforms, such as, for example, desktop computer screens, mobile applications, web browsers, specialized software applications, printer-friendly formats, etc.

As indicated above, FIG. 4 is provided merely as an example interface. Other examples (e.g., differently arranged interface) are possible and may differ in arrangement, form, or design from what was described with regard to FIG. 4.

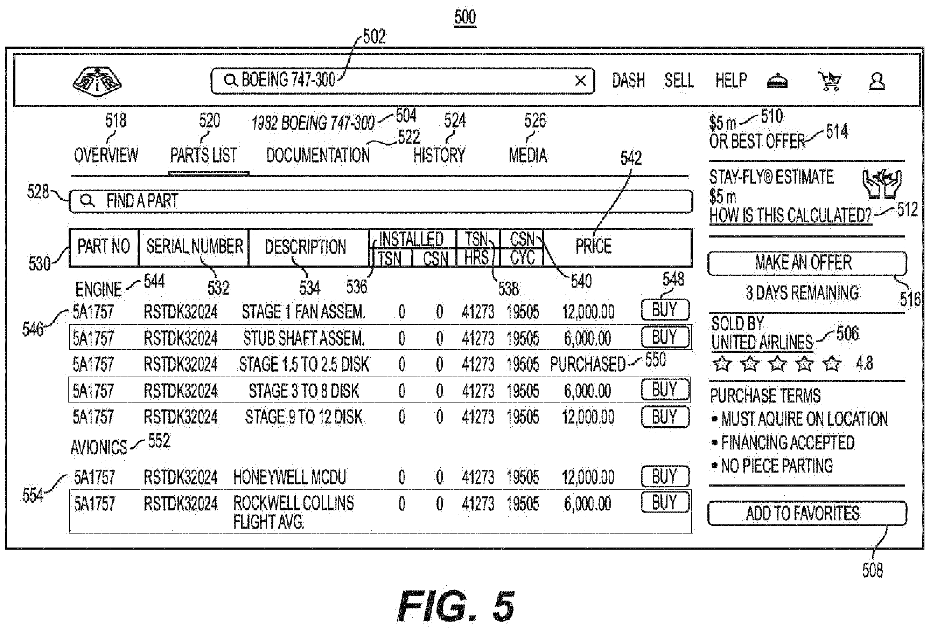

FIG. 5 depicts a simplified screen shot of an exemplary buyer interface 500 for providing a list of parts available for purchase, according to one or more embodiments. A buyer may reach the exemplary buyer interface 500 by, for example, connecting to the equipment online marketplace platform 102 via a user device 110 on network 108, entering a buyer interface subsystem, and entering an attribute of a desired equipment model to search for (e.g., typing in "BOEING 747-300" at search box 502, or any other method of entering/selecting an attribute). In response to the search, search results corresponding to matching equipment, such as the resulting parts list 520, may be displayed at the user device 110, as shown in FIG. 5. Along with the search results, the exemplary buyer interface 500 may display, for example, an indicator 504 of the exact equipment model which corresponds to the equipment search results, a seller information 506 of the equipment, and an interactive feature 508 for the user to create a shortcut for this particular equipment parts list for purposes of revisiting. Additionally, the exemplary buyer interface 500 may present, for example, a separate listing specifically for purchasing the entire equipment (e.g., the entire airplane indicated by 504), using indications of a proposed price 510, a buyer offer solicitation 514, and an elaboration of the proposed price 512, as well as an interactive feature 516 for making an offer on the entire equipment.

The search result shown in the exemplary buyer interface 500 may additionally present the user with an interface to navigate through different types of information regarding the matching equipment (e.g., tabs with labels, with embedded functions of allowing access to overview 518, parts list 520, documentation 522, history 524, and media 526). The user may, for example, select the tab representing parts list 520 of the matching equipment. In response, a list of parts, organized by attributes (e.g., in tabular format), may be displayed at the exemplary buyer interface 500, along with, for example, an interactive feature 528 that allows a user to search within the parts list. The exemplary buyer interface 500 may allow users to sort the parts list by a certain attribute (e.g., clicking on part number header 530 may sort the parts list by the part number attribute in an ascending order). Additionally, the exemplary buyer interface 500 may include a scroll bar, or any other widget which enables users to display any additional data that could not fit in the window or screen.

The parts list may display various attributes of the listed parts, such as a part number 530, serial number 532, description 534, time and cycles since installation 536, time since new 538, cycles since new 540, and a proposed starting price 542. The arrangement and a selection of the display of these attributes may be customized by a buyer at the equipment online marketplace platform 102 in accordance with the buyer's attribute view preferences. Additionally, or alternatively, the arrangement and the selection of these attributes may be a result of a file format imported from the manifest data files, input(s) made at a seller interface (e.g., by a seller or an agent authorized as a seller), input(s) made by an operator of the server system 104, and/or a preconfigured criteria being applied at the server system 104.

In the exemplary buyer interface 500, listings associated with engine 544 and avionics 552 are shown as example listings. The listings in the parts list may have been generated in response to a seller's selection, to list the engine of the airplane by individual components. For example, a part 546 with description "stage 1 fan assembly," may be listed as shown in the exemplary buyer interface 500, as an individual component at a proposed starting price of $12,000.00. This listing may also indicate the attributes, such as part number, serial number, time and cycles since installation, time since new, and cycles since new, of the part 546. After reviewing these attributes of the 546, a buyer may initiate a purchase transaction of this component by, for example, pressing the "BUY" button 548. For a listing with a pending transaction, the exemplary buyer interface 500 may hide the price attribute and the "BUY" button 548 from the listing, and replace those fields with a text display indicating that this listing is no longer available for a transaction (e.g., "PURCHASED" sign 550). In this way, a user may be allowed only to initiate transaction for available parts such as parts 446 and 454.

As indicated above, FIG. 5 is provided merely as an example interface. Other examples (e.g., differently arranged interface) are possible and may differ in arrangement, form, or design from what was described with regard to FIG. 5.

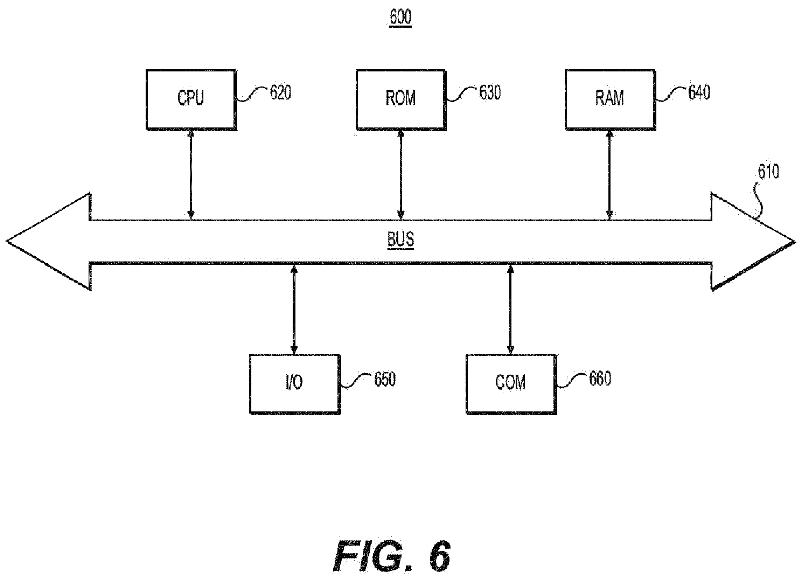

FIG. 6 depicts an exemplary computer device or system, in which embodiments of the present disclosure, or portions thereof, may be implemented. In some implementations, a user device 110, the server system 104, and/or any computer system for performing the various embodiments of the present disclosure, may correspond to device 600. Additionally, each of the exemplary computer servers, databases, user interfaces, modules, and methods described above with respect to FIGS. 1-5 can be implemented in device 600 using hardware, software, firmware, tangible computer readable media having instructions stored thereon, or a combination thereof and may be implemented in one or more computer systems or other processing systems. Hardware, software, or any combination of such may implement each of the exemplary systems, user interfaces, and methods described above with respect to FIGS. 1-5.

If programmable logic is used, such logic may execute on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computer linked or clustered with distributed functions, as well as pervasive or miniature computers that may be embedded into virtually any device.

For instance, at least one processor device and a memory may be used to implement the above-described embodiments. A processor device may be a single processor, a plurality of processors, or combinations thereof. Processor devices may have one or more processor "cores."

Various embodiments of the present disclosure, as described above in the examples of FIGS. 1-5, may be implemented using a processor device 600. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multiprocessor machines. In addition, in some embodiments the order of operations may be rearranged without departing from the spirit of the disclosed subject matter.

As shown in FIG. 6, a device 600 used for performing the various embodiments of the present disclosure, such as user device 110, the server system 104, or computer systems of any one or more entities associated with an equipment dismantlement process, may include a central processing unit (CPU) 620. CPU 620 may be any type of processor device including, for example, any type of special purpose or a general-purpose microprocessor device. As will be appreciated by persons skilled in the relevant art, CPU 620 also may be a single processor in a multi-core/multiprocessor system, such system operating alone, or in a cluster of computing devices operating in a cluster or server farm. CPU 620 may be connected to a data communication infrastructure 610, for example, a bus, message queue, network, or multi-core message-passing scheme.

A device 600, such as user device 110, the server system 104, or computer systems of any one or more entities associated with an equipment dismantlement process, may also include a main memory 640, for example, random access memory (RAM), and may also include a secondary memory 630. Secondary memory, e.g., a read-only memory

(ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 630 may include other similar means for allowing computer programs or other instructions to be loaded into device 600. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 600.

A device 600 may also include a communications interface ("COM") 660. Communications interface 660 allows software and data to be transferred between device 600 and external devices. Communications interface 660 may include a modem, a network interface (such as an Ethernet card), a communications port, a PCMCIA slot and card, or the like. Software and data transferred via communications interface may be in the form of signals, which may be electronic, electromagnetic, optical, or other signals capable of being received by communications interface 660. These signals may be provided to communications interface 660 via a communications path of device 600, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. A device 600 also may include input and output ports 650 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems, or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope and spirit of the disclosure being indicated by the following claims.

## Claims

1. A computer-implemented method for creating an immutable record of part dismantlement transactions and generating electronic listings of harvested parts, the method comprising:
receiving, by one or more processors, one or more images of a first part of equipment, wherein the first part has been disassembled from the equipment;
generating, by the one or more processors, a first removal document, the first removal document comprising data indicative of a disassembly of the first part from the equipment;
collecting, by the one or more processors, one or more data attributes associated with the first part, by at least one of accessing one or more databases or receiving one or more user inputs;
storing, by the one or more processors, the one or more images of the first part, the first removal document, and the one or more data attributes associated with the first part, in a shared database; and
generating, by the one or more processors, one or more electronic listings for electronically transacting the first part, based on the stored one or more images of the first part, the first removal document, and the one or more data attributes associated with the first part.

2. The method of claim 1, wherein the storing the one or more one or more images of the first part, the first removal document, and the one or more data attributes associated with the first part, in the shared database further comprises:
recording at least one of the one or more images of the first part, the first removal document, and the one or more data attributes associated with the first part, as one or more first blockchain entries in a shared ledger in the shared database.

3. The method of claim 2, further comprising:
receiving, by one or more processors, one or more images of a second part of equipment, wherein the second part has been disassembled from the equipment after the disassembly of the first part;
generating, by the one or more processors, a second removal document, the second removal document comprising data indicative of a disassembly of the second part from the equipment;
collecting, by the one or more processors, one or more data attributes associated with the second part by at least one of accessing one or more databases or receiving one or more user inputs;
storing, by the one or more processors, the one or more images of the second part, the second removal document, and the one or more data attributes associated with the second part, in the shared database; and
generating, by the one or more processors, one or more electronic listings for electronically transacting the first part, based on the stored one or more images of the first part, the first removal document, and the one or more data attributes associated with the first part.

4. The method of claim 3, wherein the storing the one or more one or more images of the first part, the first removal document, and the one or more data attributes associated with the first part, in the shared database further comprises:
recording at least one of the one or more images of the second part, the second removal document, and the one or more data attributes associated with the second part, as one or more second blockchain entries in the shared ledger in the shared database.

5. The method of claim 4, wherein the first one or more blockchain entries and the second one or more blockchain entries belong to a common blockchain.

6. The method of any preceding claim, further comprising:
generating, by the one or more processors, a user interface to display a set of part details associated with the first part based on the disassembly of the first part and the collected one or more data attributes associated with the first part.

7. The method of any preceding claim, wherein the equipment is an aircraft.

8. The method of any preceding claim, wherein the one or more data attributes associated with the first part comprises at least one of a unique part identifier of the first part, a description of the first part, a price of the first part, and a unique identifier of the equipment;

9. A computer system for creating an immutable record of part dismantlement transactions and generating electronic listings of harvested parts, the computer system comprising:
a memory having processor-readable instructions stored therein; and
at least one processor configured to access the memory and execute the processor-readable instructions, which when executed by the at least one processor configures the at least one processor to perform a plurality of functions, including functions for:
receiving one or more images of a first part of equipment, wherein the first part has been disassembled from the equipment;
generating a first removal document, the first removal document comprising data indicative of a disassembly of the first part from the equipment;
collecting one or more data attributes associated with the first part, by at least one of accessing one or more databases or receiving one or more user inputs;
storing the one or more images of the first part, the first removal document, and the one or more data attributes associated with the first part, in a shared database; and
generating one or more electronic listings for electronically transacting the first part, based on the stored one or more images of the first part, the first removal document, and the one or more data attributes associated with the first part.

10. The system of claim 9, wherein the storing the one or more one or more images of the first part, the first removal document, and the one or more data attributes associated with the first part, in the shared database further comprises:
recording at least one of the one or more images of the first part, the first removal document, and the one or more data attributes associated with the first part, as one or more first blockchain entries in a shared ledger in the shared database.
